# EUROPÄISCHE PATENTSCHRIFT

(11) **EP 3 724 520 B1**
(45) Veröffentlichungstag und Bekanntmachung des Hinweises auf die Patenterteilung: **18.08.2021**
(21) Anmeldenummer: 18825921.2
(22) Anmeldetag: 11.12.2018
(51) Int. Cl.: F16B 19/10, F16B 37/06, F16B 29/00

(54) **BLINDNIET**
BLIND RIVET
RIVET AVEUGLE

(30) Priorität: 10.01.2018 DE 102018100470
(43) Veröffentlichungstag der Anmeldung: 21.10.2020
(73) Patentinhaber: Böllhoff Verbindungstechnik GmbH, 33649 Bielefeld (DE)
(72) Erfinder: HEINRICHS, Heinrich, 32602 Vlotho (DE)
(74) Vertreter: HWP Intellectual Property
(86) Internationale Anmeldenummer: PCT/EP2018/084418
(87) Internationale Veröffentlichungsnummer: WO 2019/137722

(56) Entgegenhaltungen:
- EP-B1- 1 710 454
- WO-A1-2018/001710
- DE-U1- 9 001 069

## Beschreibung

### 1. Gebiet der Erfindung

Die vorliegende Erfindung betrifft einen Blindniet für eine Schraubverbindung zwischen einem Trägerbauteil und einem Befestigungsteil, eine Verbindung mit diesem Blindniet, ein Herstellungsverfahren für diesen Blindniet sowie ein Verbindungsverfahren zum Verbinden von Trägerbauteil und Befestigungsteil mittels Blindniet.

### 2. Hintergrund der Erfindung

Aus DE GM 90 01 069.8 ist eine Blindnietmutter bekannt, die aus einem elastischen Außenkörper und einem metallischen Gewindeeinsatz besteht. Der elastische Außenkörper hat einen in ein Befestigungsloch des Trägerteils einsteckbaren hülsenförmigen Schaft mit einem Befestigungsflansch und einer Faltzone, die zu einem einen Schließkopf bildenden Stauchwulst faltbar ist, so dass die Blindnietmutter einerseits durch den Befestigungsflansch und andererseits durch den Stauchwulst an dem Befestigungsteil festgelegt wird. Bei der vorbekannten Blindnietmutter ist die Gewindebuchse in ein Gewindeelement und eine Abstandshülse unterteilt, wobei sich die Abstandshülse am Ende des Faltvorganges an die Unterseite des Befestigungsteiles anlegt. Es sind auch Ausführungsformen bekannt, bei denen die Gewindebuchse einstückig ausgebildet ist.

In jedem Fall wird die für den Faltvorgang erforderliche Axialkraft von der Befestigungsschraube über die metallische Gewindebuchse unmittelbar auf das Befestigungsteil abgeleitet, ohne dass der Stauchwulst letztendlich die Axialkraft aufnehmen muss. Dennoch unterliegt die vorbekannte Blindnietmutter gewissen Festigkeitsbeschränkungen. Soll die Blindnietmutter beispielsweise für eine Schraubverbindung mit einer hochfesten Schraube der Festigkeitsklasse von mehr als 8.8 (gemäß DIN -JSO 898 Teil 1) ausgelegt werden, so besteht die Gefahr von unzulässigen Verwindungen des elastischen Außenkörpers und einer zu hohen Flächenpressung zwischen der Stirnseite der Gewindebuchse und der Unterseite des Befestigungsteils.

EP 1 710 454 B1 offenbart einen Blindniet für eine Schraubverbindung zwischen einem Trägerbauteil und einem Befestigungsteil. Dieser Blindniet besteht aus einem elastischen Außenkörper mit einem in ein Befestigungsloch des Trägerteils einsteckbaren hülsenförmigen Schaft, der einen Befestigungsflansch und eine zu einer Stauchwulst faltbare Faltzone aufweist, welche auf gegenüberliegenden Seiten des Trägerteils abstützbar sind. Zudem weist der Blindniet eine metallische Buchse auf, die innerhalb des Außenkörpers angeordnet ist. Der beispielsweise aus einem thermoplastischen Elastomer bestehende Außenkörper wird die Buchse umgebend spritzgegossen. Während dieses Vorgangs wird ein Verankerungsvorsprung des Außenkörpers erzeugt, der in einen ringförmigen Einstich des Verankerungsabschnitts der Buchse eingreift. Auf diese Weise bilden der Außenkörper und die im Inneren angeordnete Buchse eine formschlüssige Verbindung. Wird der Blindniet innerhalb einer Schraubverbindung axial komprimiert, bildet sich die Faltwulst in der Faltzone aus. Dabei ist es von Nachteil, wenn der Außenkörper nicht ausreichend axial fixiert wird, sodass dieser von der Buchse springt. Des Weiteren hat sich als Nachteil gezeigt, dass sich nicht alle für bestimmte Umgebungsbedingungen vorteilhafte Materialien auch mithilfe des Spritzgussverfahrens geeignet zu einem Außenkörper verarbeiten lassen. Selbst wenn sie sich vorteilhaft verarbeiten lassen, ergeben sich nicht immer die passenden Adhäsionskräfte zwischen innerer Buchse und dem umgebenden Außenkörper. Entsprechend bildet der Blindniet keine belastbare Einheit, was schlechte Dämpfungseigenschaften oder ein unvorteilhaftes Lösen einer hergestellten Verbindung zur Folge haben kann.

Es ist daher die Aufgabe vorliegender Erfindung, einen Blindniet bereitzustellen, der aufgrund seiner Konstruktion selbst bei unterschiedlichsten Umgebungseinflüssen und unterschiedlichsten Materialkombinationen eine Verbindung stabil und verlässlich unterstützt.

### 3. Zusammenfassung der Erfindung

Die obige Aufgabe wird durch einen Blindniet gemäß dem unabhängigen Patentanspruch 1, durch ein Verbindungsverfahren für eine Schraubverbindung zwischen einem Trägerbauteil und einem Befestigungsteil mit dem Blindniet gemäß dem unabhängigen Patentanspruch 12, durch eine entsprechend hergestellte Verbindung gemäß dem unabhängigen Patentanspruch 13 sowie durch Herstellungsverfahren für einen derartigen Blindniet gemäß den unabhängigen Patentansprüchen 14, 15 und 16 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Der erfindungsgemäße Blindniet für eine Schraubverbindung weist die folgenden Merkmale auf: einen elastischen Außenkörper mit einem hülsenförmigen Schaft, der einen Befestigungsflansch und eine zu einer Stauchwulst faltbare hohlzylindrische Faltzone aufweist, sodass ein Trägerbauteil zwischen dem Befestigungsflansch und der Stauchwulst abstützbar ist, eine metallische Buchse, die innerhalb des Außenkörpers angeordnet ist und die einen im Bereich der Faltzone angeordneten Abstützabschnitt aufweist, der relativ zum Außenkörper längs verschiebbar ist sowie an einem vom Abstützabschnitt abgewandten axialen Ende von einem ringförmigen Halteflansch axial begrenzt wird, der eine radiale Ausdehnung des Außenkörpers abdeckt, und eine den Außenkörper umgebende Fixierhülse, die benachbart zum Halteflansch der Buchse angeordnet ist, sich axial in Richtung des Befestigungsflansches erstreckt und eine radiale Ausdehnung des Außenkörpers außerhalb der Faltzone sowie zwischen Buchse und Fixierhülse auf maximal die radiale Ausdehnung des Halteflansches der Buchse begrenzt.

Der erfindungsgemäße Blindniet für die Schraubverbindung zwischen beispielsweise einem Trägerbauteil und einem Befestigungsteil erzeugt aufgrund des elastischen Außenkörpers eine schwingungsdämpfende Anordnung bzw. Befestigung der oben genannten Bauteile aneinander. Dieser Blindniet zeichnet sich aufgrund seiner Konstruktion durch einen variablen Einsatz von elastischen Materialien zur Herstellung des Außenkörpers aus. Denn unabhängig von der Materialwahl des Außenkörpers wird dieser zwischen der inneren metallischen Buchse und einer den Außenkörper umgebenden Fixierhülse nahe dem ringförmigen Halteflansch der Buchse gehalten. Diese Haltefunktion mit Hilfe der Fixierhülse ist örtlich auf einen Bereich des Blindniets beschränkt, der gerade nicht die schwingungsdämpfende Stauchwulst bereitstellt. Während sich also der elastische Außenkörper im Bereich der hohlzylindrischen Faltzone frei falten und an das Trägerbauteil anlegen kann, sorgt die davon abgewandte Kombination von Fixierhülse, innerer metallischer Buchse und Halteflansch der Buchse dafür, dass der Außenkörper verlässlich in der Blindnietkonstruktion befestigt ist.

Gemäß einer bevorzugten Ausführungsform vorliegender Erfindung deckt der Halteflansch der Buchse vollständig die radiale Ausdehnung des Außenkörpers ab. Mithilfe dieser konstruktiven Gestaltung bildet der Halteflansch einen maximalen axialen Hinterschnitt für den Außenkörper. Dieser Hinterschnitt sorgt dafür, dass der Außenkörper trotz der mechanischen Belastungen im Rahmen der Verbindung nicht über den Halteflansch gleiten kann. Damit ist ebenfalls gewährleistet, dass die schwingungsdämpfende Stauchwulst angrenzend an das Trägerbauteil bestehen bleibt.

Gemäß einer weiteren bevorzugten Ausführungsform vorliegender Erfindung begrenzt eine axiale Länge der Fixierhülle eine axiale Länge der Faltzone, ohne durch eine Verjüngung einer Wandstärke des Außenkörpers die Faltzone zu unterstützen. Dies bedeutet im Speziellen, dass die Fixierhülse einen Befestigungsbereich abdeckt, in dem der Außenkörper zwischen Fixierhülse und metallischer Buchse gehalten wird. Zudem bildet die Fixierhülse eine stabilisierende Begrenzung, bis zu der sich die faltbare hohlzylindrische Faltzone in eine Stauchwulst umformen kann. Durch diese versteifende Begrenzung mithilfe der Fixierhülse ist es nicht erforderlich, eine radiale Wandstärke des Außenkörpers zu reduzieren, um ein gezieltes Abknicken des Außenkörpers in der faltbaren hohlzylindrischen Faltzone zu erzeugen. Denn eine derartige Materialverjüngung stellt gleichzeitig auch eine Schwächung des Außenkörpers dar. Dies könnte beispielsweise zu einem Versagen des Materials des Außenkörpers sowie zu einer Verringerung der damit verbundenen Dämpfungsfunktionen führen.

Es ist zudem bevorzugt, dass der Außenkörper einen Befestigungsflansch aufweist, der einen Aufnahmeraum für eine Verteilerscheibe bereitstellt. Gemäß einer weiteren bevorzugten Ausführungsform vorliegender Erfindung ist in dem Befestigungsflansch die Verteilerscheibe verliersicher gehalten, die vorzugsweise eine Rändelung an einer Seite zugewandt zur Buchse aufweist.

Die metallische Buchse ist im Inneren des elastischen Außenkörpers angeordnet. Bei einer Herstellung einer Verbindung mithilfe des Blindniets wird die metallische Buchse in Richtung Trägerbauteil versetzt, während sich die Stauchwulst ausbildet. Vorteilhafterweise liegt im Rahmen der hergestellten Verbindung das dem Trägerbauteil zugewandte axiale Ende der metallischen Buchse am Befestigungsteil an. Um hier die durch die metallische Buchse aufgebrachten mechanischen Lasten optimal auf das Befestigungsteil verteilen zu können, ist im Befestigungsflansch des elastischen Außenkörpers die Verteilerscheibe vorgesehen. Vorzugsweise besteht diese Verteilerscheibe aus Metall und überträgt die von der metallischen Buchse aufgenommenen Axialkräfte auf das Befestigungsteil. Vorzugsweise wird eine Metall-Metall-Verbindung zwischen metallischer Buchse und dem Befestigungsteil mithilfe der lastübertragenden Verteilerscheibe realisiert. Auf diese Weise wird vermieden, dass beispielsweise durch Materialrelaxation die hergestellte Verbindung geschwächt wird.

Weiterhin bevorzugt weist die Buchse dem Befestigungsflansch zugewandt einen konischen Endabschnitt auf, der eine axiale Stützfläche und einen axialen Hinterschnitt bereitstellt. In diesem Zusammenhang weist die axiale Stützfläche gemäß einer Ausführungsform vorliegender Erfindung eine Rändelung als Verdrehsicherung auf.

Mithilfe der Formgebung der inneren metallischen Buchse werden verschiedene Funktionen realisiert. Mit Hilfe des konisch geformten Endabschnitts wird die Möglichkeit eröffnet, die metallische Buchse nicht nur mit einem elastischen Material des Außenkörpers zu umspritzen. Vielmehr ist neben einem Spritzgussverfahren oder einem anderen Umformverfahren auch die Möglichkeit gegeben, die metallische Buchse in einen vorgeformten elastischen Außenkörper einzusetzen bzw. einzuschieben. Dabei dient der konische Endabschnitt als Einführhilfe, der die exakte Positionierung der metallischen Buchse im Inneren des elastischen Außenkörpers unterstützt. Trotz dieser konischen Formgebung des Endabschnitts weist dieser eine axiale Stützfläche auf, die innerhalb der hergestellten Verbindung vorzugsweise an der bereits oben genannten Verteilerscheibe anliegt. Somit wirkt der konische Endabschnitt ebenfalls lastabtragend allein oder in Kombination mit der Verteilerscheibe. Weist die axiale Stützfläche dazu eine bevorzugte Rändelung auf, dann sorgt diese Rändelung zusätzlich für eine Rotationshemmung zwischen Verteilerscheibe und Buchse, beispielsweise bei der Herstellung der Verbindung mittels Blindniet. Zudem wird vorzugsweise die konische Form des Endabschnitts dazu verwendet, in dessen Formgebung einen axialen Hinterschnitt vorzusehen. Dieser wirkt mit einer Innenseite des elastischen Außenkörpers zusammen.

Dieser axiale Hinterschnitt verhindert vorzugsweise ein axiales Versetzen der metallischen Hülse entgegen der Installationsrichtung bzw. Befestigungsrichtung aus dem elastischen Außenkörper heraus. Damit realisiert der konische Endabschnitt mit seinem axialen Hinterschnitt zusätzlich eine Sicherung bzw. einen zusätzlichen Halt der metallischen Buchse im Inneren des elastischen Außenkörpers.

Gemäß einer weiteren bevorzugten Ausführungsform vorliegender Erfindung weist die Fixierhülse einen umfänglichen Einstich auf, der einen Formschluss zwischen Außenkörper und Buchse unterstützt. Zudem ist es bevorzugt, dass die metallische Buchse im Inneren des Außenkörpers an einer radialen Außenseite eine Verdrehsicherung in Form von Längsrändeln umfasst, die außerhalb der Faltzone angeordnet sind.

Außerhalb der Faltzone ist aufgrund der Anordnung der umgebenden Fixierhülse bevorzugt dafür gesorgt, dass der elastische Außenkörper mit seiner radialen Innenseite an der radialen Außenseite der metallischen Buchse anliegt. Da sich die radiale Außenseite der metallischen Buchse durch die Längsrändelung auszeichnet, sorgt ein sich ausbildender Formschuss aufgrund des sich anlegenden elastischen Materials des Außenkörpers an der radialen Außenseite der metallischen Buchse für eine zusätzliche Verdrehsicherung. Dies unterstützt die Integrität des vorliegenden Blindniets.

Weiterhin bevorzugt sind unterhalb des Befestigungsflansches des Außenkörpers über den Umfang verteilte Stege zum Festklemmen des Außenkörpers in einer Bohrung eines Trägerbauteils vorgesehen. Des Weiteren bevorzugt ist die Buchse als Gewindebuchse mit einem Innengewinde zur Aufnahme einer Befestigungsschraube ausgebildet, sodass der Blindniet als Blindnietmutter dient. Weiterhin bevorzugt ist die metallische Buchse im Inneren des elastischen Außenkörpers gewindefrei ausgebildet.

Gemäß unterschiedlicher bevorzugter Ausführungsformen vorliegender Erfindung besteht der Außenkörper aus einem Elastomer oder einem thermoplastischen Elastomer bevorzugt auf Polyesterbasis oder aus einem vernetzten Elastomer. Je nach Anwendungsfall werden aus dieser Materialbreite beispielsweise Materialien mit guter Chemikalienbeständigkeit und/oder Wärmeformbeständigkeit ausgewählt. Weiterhin bevorzugt ist das Elastomer auf Polyesterbasis ein Polybutylenterephtalat (PBT) oder Polyethylenenterephtalat (PET). Weitere nicht abschließende Beispiele für Elastomere sind Ethylen-Propylen-DienKautschuk (EPDH), Acrylnitril-Butadien-Kautschuk (NBR), Silikon-Kautschuk (VMQ) und chemisch chlorsulfoniertes Polyethylen (CSM). Weiterhin bevorzugt besteht der elastische Außenkörper aus einem Silikon oder einem ähnlichen chemisch und thermisch beständigen Werkstoff.

Vorliegende Erfindung offenbart zudem ein Verbindungsverfahren für eine Schraubverbindung zwischen einem Trägerbauteil und einem Befestigungsteil. Dieses Verbindungsverfahren weist die folgenden Schritte auf: Einstecken des Blindniets gemäß einer der oben beschriebenen bevorzugten Ausführungsformen in eine Bohrung im Trägerbauteil, Anordnen des Befestigungsteils mit einer Öffnung angrenzend an den Befestigungsflansch des Außenkörpers und Einschrauben einer Befestigungsschraube in den Blindniet, wobei der Außenkörper in einer Faltzone derart gefaltet wird, dass sich der Befestigungsflansch und eine Faltwulst auf gegenüberliegenden Seiten des Trägerbauteils abstützen, wenn das Trägerbauteil und das Befestigungsbauteil aneinander befestigt sind.

Im Rahmen des Verbindungsverfahrens ist es bevorzugt, dass die Befestigungsschraube in ein Innengewinde der Buchse des Blindniets oder in ein anderes weibliches Gewindeelement eingeschraubt wird.

Zudem umfasst vorliegende Erfindung eine Verbindung zwischen einem Trägerbauteil und einem Befestigungsteil, die mithilfe einer Schraubverbindung unter Verwendung eines Blindniets gemäß einer der oben beschriebenen Ausführungsformen aneinander befestigt sind.

Erfindungsgemäß wird zudem ein Herstellungsverfahren für den Blindniet offenbart, welches die folgenden Schritte aufweist: Bereitstellen einer metallischen Buchse mit einem ringförmigen Halteflansch, Einstecken der Buchse in einen elastischen Außenkörper mit einem hülsenförmigen Schaft, der einen Befestigungsflansch und eine zu einer Stauchwulst faltbare hohlzylindrische Faltzone aufweist, und Vorsehen einer den Außenkörper umgebenden Fixierhülse benachbart zum Halteflansch der Buchse, die sich axial in Richtung des Befestigungsflansches erstreckt.

Vorzugsweise ist das Herstellungsverfahren gemäß drei unterschiedlichen Herstellungsalternativen realisierbar, wie unten näher erläutert wird. Eine erste Alternative besteht darin, einen bereits vorgeformten elastischen Außenkörper mit der metallischen Buchse zu versehen, d.h. die metallische Buchse in eine zentrale Öffnung des Außenkörpers einzustecken. Entsprechend ist die metallische Buchse koaxial zum Außenkörper angeordnet. Die Fixierhülse wird an der radialen Außenseite des Außenkörpers vorgesehen. Entsprechend ist der Außenkörper zwischen der Fixierhülse und der metallischen Buchse angeordnet.

Gemäß unterschiedlicher bevorzugter Ausführungsformen dieser Herstellungsalternative wird die Fixierhülse auf dem Außenkörper angeordnet, bevor oder nachdem die Buchse in den Außenkörper gesteckt worden ist. Aus diesen unterschiedlichen Ausführungsformen dieser Herstellungsalternative folgt, dass zunächst die Fixierhülse auf dem Außenkörper angeordnet wird. Nachfolgend wird dann die metallische Buchse in den Außenkörper mit Fixierhülse eingesteckt. In einer alternativen Verfahrensführung der Herstellung ist es ebenfalls bevorzugt, zunächst die metallische Buchse in den Außenkörper einzustecken. Danach wird auf diesen Zusammenbau aus Außenkörper und metallischer Buchse die Fixierhülse aufgesteckt.

Vorliegendes Herstellungsverfahren umfasst zudem bevorzugt das Anordnen einer Scheibe im Befestigungsflansch des Außenkörpers. Entsprechend der obigen Beschreibung dient diese Scheibe der Lastverteilung, wenn innerhalb der hergestellten Verbindung die metallische Buchse über die Scheibe gegen das Trägerbauteil gedrückt wird.

Gemäß einer weiteren bevorzugten Alternative des Herstellungsverfahrens für den Blindniet sind folgende Verfahrensschritte vorgesehen: Anordnen der Fixierhülse in einer Spritzgussform, die eine Gestalt des elastischen Außenkörpers mit dem hülsenförmigen Schaft vorgibt, wobei der hülsenförmige Schaft den Befestigungsflansch und die zu einer Stauchwulst faltbare hohlzylindrische Faltzone aufweist, Einspritzen des elastischen Außenkörpers mit dem hülsenförmigen Schaft in die Fixierhülse und Einstecken einer metallischen Buchse mit einem ringförmigen Halteflansch in den Außenkörper mit Fixierhülse derart, dass die Fixierhülse den Außenkörper benachbart zum Halteflansch der Buchse umgibt.

Gemäß dieser weiteren bevorzugten Herstellungsalternative wird zunächst die Fixierhülse in der Spritzgussform angeordnet. Nachfolgend wird dann der elastische Außenkörper in die Fixierhülse eingespritzt, sodass sich der Verbund aus Fixierhülse und elastischem Außenkörper ergibt. Dabei versteht es sich, dass das Innere des elastischen Außenkörpers durch einen Dorn oder eine ähnliche Konstruktion freigehalten wird. Nachdem der Verbund aus elastischem Außenkörper und Fixierhülse hergestellt worden ist, wird dieser bevorzugt aus der Spritzgussform entformt. Erst nach dem Entformen des Verbundes aus Außenkörper und Fixierhülse wird die metallische Buchse in den Außenkörper eingesteckt. Abschließend wird vorzugsweise die Scheibe im Befestigungsflansch des Außenkörpers angeordnet, um die bereits oben beschriebene Funktionalität des Lastabtrags über die Scheibe zu gewährleisten.

Eine weitere bevorzugte Alternative des Herstellungsverfahrens für den Blindniet weist die folgenden Schritte auf: koaxiales Anordnen der Fixierhülse und der metallischen Buchse mit dem ringförmigen Halteflansch in einer Spritzgussform, die eine Form des elastischen Außenkörpers mit einem hülsenförmigen Schaft vorgibt, wobei der hülsenförmige Schaft den Befestigungsflansch und die zu einer Stauchwulst faltbare hohlzylindrische Faltzone aufweist, Einspritzen des elastischen Außenkörpers mit dem hülsenförmigen Schaft zwischen die Fixierhülse und die metallische Buchse, so dass die Fixierhülse den Außenkörper benachbart zum Halteflansch der Buchse umgibt.

In einer abgewandelten Herstellungsalternative wird neben der Fixierhülse auch die metallische Buchse innerhalb der Spritzgussform angeordnet. Dieses Vorgehen hat den praktischen Vorteil, dass weniger Herstellungsschritte für die Herstellung des Blindniets erforderlich sind. Denn der elastische Außenkörper wird in der Spritzgussform zwischen die Fixierhülse und die metallische Buchse eingespritzt, sodass ein Verbund aus Fixierhülse, Außenkörper und Buchse entsteht. Da vorzugsweise der elastische Außenkörper durch die Spritzgussform mit seinen bereits oben ausführlich beschriebenen konstruktiven Merkmalen vorgegeben wird, liegt nach dem Spritzgussverfahren der Außenkörper mit Befestigungsflansch vor. Entsprechend ist es nach einem bevorzugten Entformen des Außenkörpers aus der Spritzgussform vorgesehen, in dem Befestigungsflansch die bereits oben beschriebene Scheibe für einen späteren Lastabtrag in der Verbindung anzuordnen.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine Seitenansicht einer bevorzugten Ausführungsform des Blindniets vorliegender Erfindung,
- Figur 2: eine seitliche Schnittdarstellung des Blindniets aus Figur 1,
- Figur 3: eine bevorzugte Ausführungsform einer Verbindung von zwei Bauteilen mit dem erfindungsgemäßen Blindniet,
- Figur 4: eine Explosionsdarstellung einer bevorzugten Ausführungsform des Blindniets vorliegender Erfindung,
- Figur 5: eine perspektivische Darstellung der bevorzugten Buchse und der Verteilerscheibe des erfindungsgemäßen Blindniets,
- Figur 6: eine seitliche Schnittdarstellung der Buchse und der Verteilerscheibe aus Figur 5,

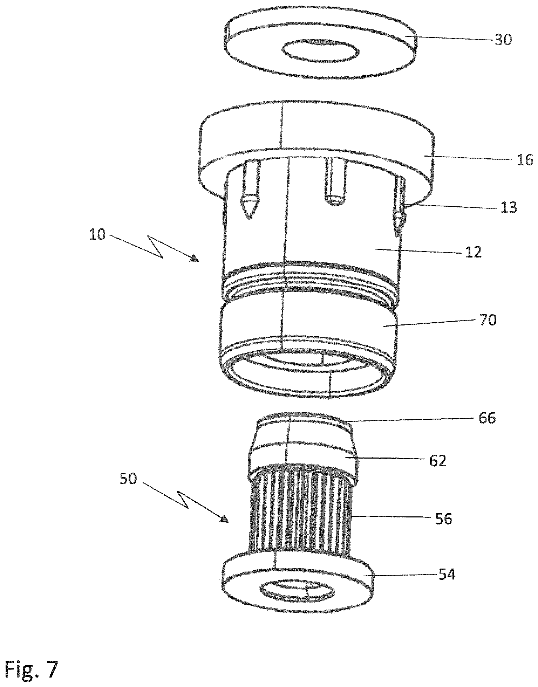

- Figur 7: eine perspektivische Explosionsdarstellung des bevorzugten Blindniets mit noch nicht eingesetzter Buchse,

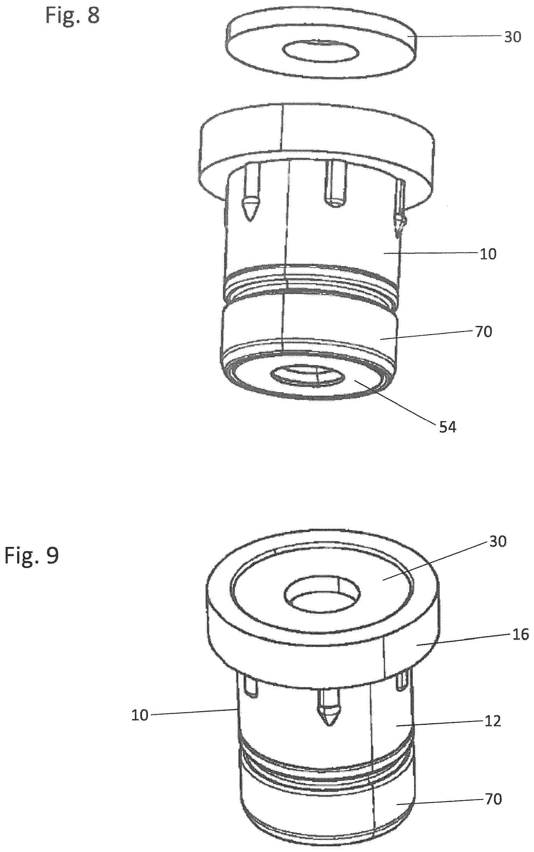

- Figur 8: eine perspektivische Darstellung einer bevorzugten Ausführungsform des Blindniets mit noch nicht eingesetzter Verteilerscheibe,
- Figur 9: eine perspektivische Ansicht einer bevorzugten Ausführungsform des erfindungsgemäßen Blindniets,

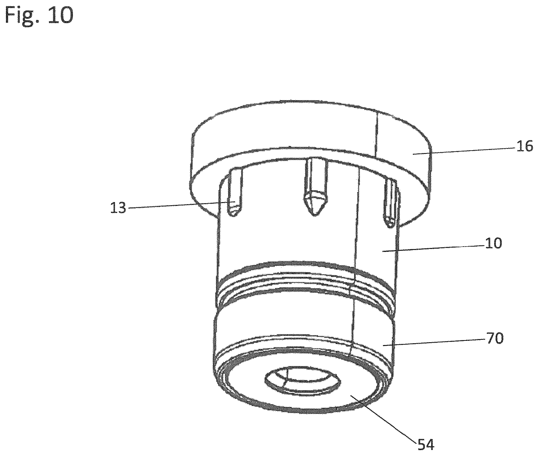

- Figur 10: eine weitere perspektivische Ansicht des Blindniets gemäß Figur 9,

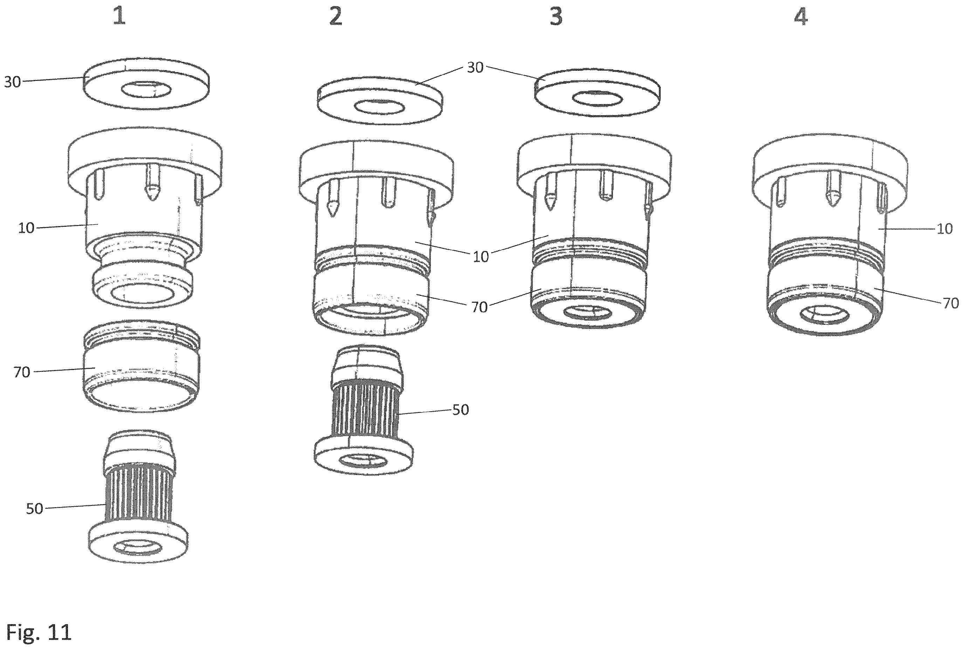

- Figur 11: verschiedene Sequenzen eines bevorzugten Zusammenbaus des erfindungsgemäß bevorzugten Blindniets aus seinen Einzelteilen,
- Figur 12: ein Flussdiagramm einer bevorzugten Ausführungsform des Verbindungsverfahrens des Blindniets,
- Figur 13: ein Flussdiagramm einer ersten bevorzugten Ausführungsform des Herstellungsverfahrens des Blindniets,
- Figur 14: ein Flussdiagramm einer zweiten bevorzugten Ausführungsform des Herstellungsverfahrens des Blindniets und
- Figur 15: ein Flussdiagramm einer dritten bevorzugten Ausführungsform des Herstellungsverfahrens des Blindniets.

### 5. Detaillierte Beschreibung der bevorzugten Ausführungsformen

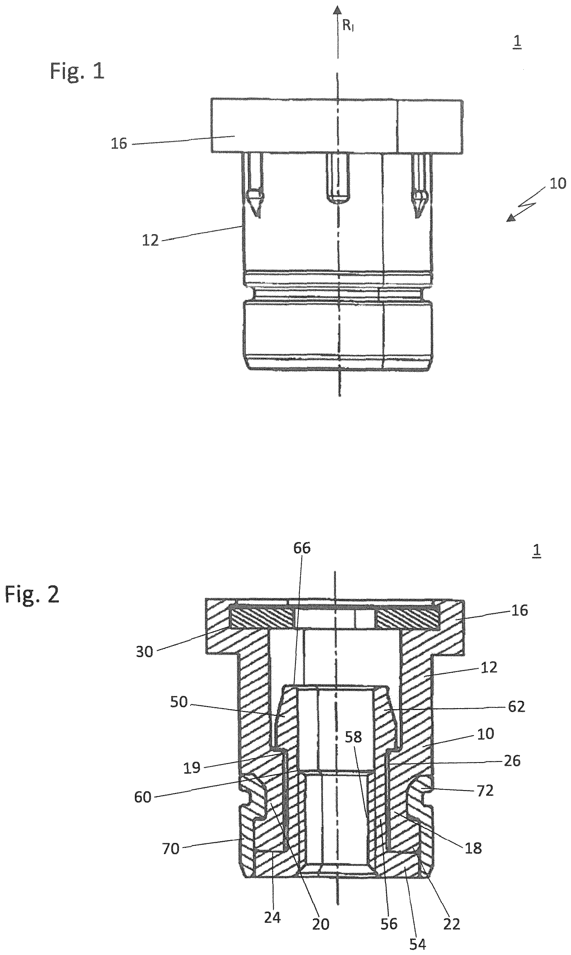

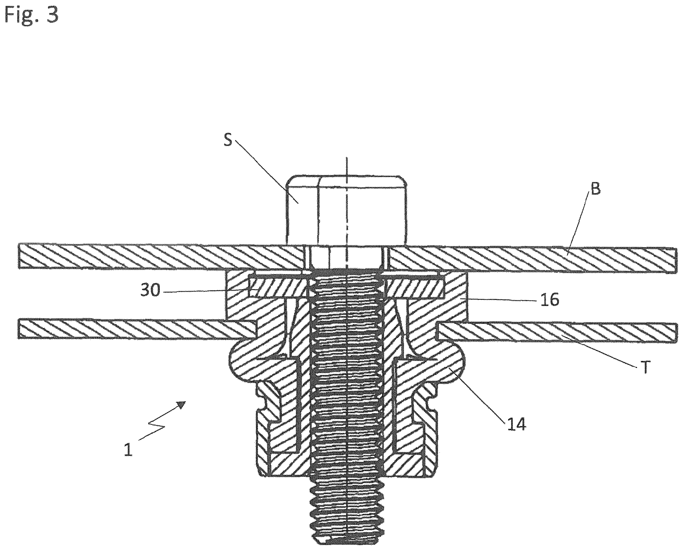

In Figur 1 ist eine Seitenansicht des erfindungsgemäß bevorzugten Blindniets 1 gezeigt. Dazu passend zeigt Figur 2 eine seitliche Schnittansicht des Blindniets 1 aus Figur 1. Der Schnitt verläuft entlang der Längsachse des Blindniets 1. Figur 3 wiederum zeigt eine bevorzugte Anwendung des Blindniets 1 zur Herstellung einer bevorzugten Verbindung zwischen einem Trägerbauteil T und einem Befestigungsteil B mithilfe einer Schraubverbindung, wie unten näher erläutert ist.

Der Blindniet 1 besteht aus einem elastischen Außenkörper 10 mit einem hülsenförmigen Schaft 12. Der hülsenförmige Schaft 12 bildet aufgrund seiner axialen Erstreckung eine faltbare hohlzylindrische Faltzone. Innerhalb der Faltzone entsteht während eines Verbindens des Trägerbauteils T und des Befestigungsteils B eine Stauchwulst 14 (siehe Figur 3). Diese stützt sich an einer Seite des Trägerbauteils T ab.

Angrenzend an den Schaft 12 ist der Außenkörper 10 durch einen Befestigungsflansch 16 begrenzt. Dieser erstreckt sich radial über einen Außendurchmesser des Schafts 12 hinaus. Dadurch bildet der Befestigungsflansch 16 eine Anlagefläche für den Blindniet 1, wenn dieser in einer Bohrung 91 des Trägerbauteils T angeordnet wird.

Vorzugsweise stellt der Befestigungsflansch 16 einen Innenraum zur Aufnahme einer Verteilerscheibe 30 bereit. Die Verteilerscheibe 30 dient der Abstützung und Lastverteilung in der Verbindung (siehe Figur 3), wenn sich eine metallische Buchse 50 an der Verteilerscheibe 30 abstützt. Die Verteilerscheibe 30 wird vorzugsweise durch einen in axialer Richtung beidseitigen Hinterschnitt im Befestigungsflansch 16 verliersicher gehalten. Es ist natürlich ebenfalls denkbar, dass die Buchse 50 in einer Verbindung den Befestigungsflansch 16 durchgreift und sich direkt am Befestigungsteil B abstützt. Zwar würde dadurch ein mechanischer Lastabtrag von der Buchse 50 auf das Befestigungsteil B auf einen kleineren Flächenbereich beschränkt sein im Vergleich zur Verteilerscheibe 30, wodurch aber nicht die Funktionalität des Blindniets 1 beeinträchtigt wäre.

Der Außenkörper 10 weist in der zylindrischen Faltzone des Schafts 12 vorzugsweise eine konstante Wandstärke auf. Die Wandstärke ist derart gewählt, dass sie ein Falten zu einer Stauchwulst 14 in der Faltzone gestattet. Gleichzeitig gewährleistet sie auch einen ausreichend starken Stauchwulst 14, der in der Verbindung am Trägerbauteil T anliegt.

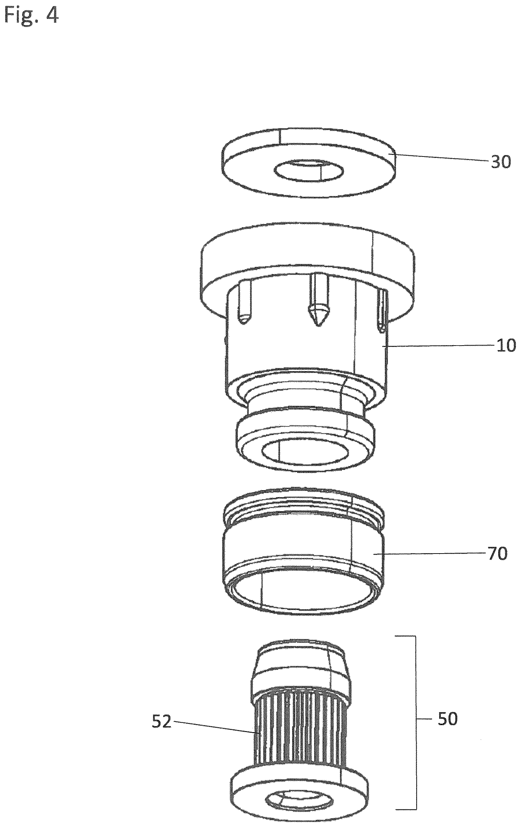

Vorzugsweise schließt sich in axialer Richtung an die Faltzone ein ebenfalls hohlzylindrischer Halteabschnitt 18 an. Der Halteabschnitt 18 liegt mit einer radialen Innenseite vorzugsweise an einer radialen Außenseite der metallischen Buchse 50 an. Bevorzugt bilden der Halteabschnitt 18 und die metallische Buchse 50 in diesem Bereich eine formschlüssige oder eine formschlüssige und reibschlüssige Verbindung, um ein Drehen der Buchse 50 im Halteabschnitt 18 zu vermeiden. Die formschlüssige Verbindung wird durch eine Längsrändelung 52 der Buchse 50 unterstützt, die in Figur 4 gezeigt ist.

Erfindungsgemäß bevorzugt hat der Außenkörper 10 im Bereich des Schafts 12 und im Halteabschnitt 18 eine durchgehende konstante Wandstärke. Es ist ebenfalls bevorzugt, dass sich ein Innendurchmesser des Halteabschnitts 18 im Vergleich zum Schaft 12 verringert. Dadurch legt sich bevorzugt der Halteabschnitt 18 an die Buchse 50 an. Zudem entsteht am radial inneren Übergang zwischen Schaft 12 und Halteabschnitt 18 eine radial einwärts gerichtete Stufe 19. Die Stufe 19 bildet vorzugsweise einen axialen Hinterschnitt, um die Buchse 50 axial innerhalb des Außenkörpers 10 zu halten.

Gemäß einer weiteren bevorzugten Ausführungsform der Ausgestaltung des Halteabschnitts 18 weist die radiale Außenseite einen umlaufenden Einstich 20 auf. Dieser unterstützt einen Eingriff eines Formmerkmals 72 einer Fixierhülse 70, sodass bevorzugt ein Formschluss gegen einen axialen Versatz der Fixierhülse 70 und der Buchse 50 vorliegt.

Ebenfalls bevorzugt erzeugt der Einstich 20 einen im Querschnitt des Außenkörpers 10 betrachteten annähernd eckigen C-förmigen Verlauf des Halteabschnitts 18, wobei das C nach radial außen offen ist. Am axial dem Befestigungsflansch 16 gegenüberliegenden Ende läuft der Außenkörper 10 bevorzugt in einem Endflansch 22 aus. Der Endflansch 22 hat vorzugsweise einen geringeren Außendurchmesser als der Befestigungsflansch 16. Trotzdem stellt er eine ausreichend große Stützfläche 24 für einen Halteflansch 54 der Buchse 50 bereit.

Die Buchse 50 ist betrachtet in einer seitlichen Schnittdarstellung und in Installationsrichtung R_{I} umgekehrt T-förmig ausgebildet, wie man beispielsweise in Figur 2 erkennen kann. Der quer verlaufende Abschnitt wird durch den ringförmig umlaufenden Halteflansch 54 gebildet, der sich am Endflansch 22 abstützt. Der Endflansch 22 bildet einen axialen Hinterschnitt gegen einen axialen Versatz der Buchse 50 im Außenkörper 10. Zudem sorgt dieser Hinterschnitt dafür, dass bei einem Verschrauben des Blindniets 1 ein axialer Versatz der Buchse 50 in Installationsrichtung R_{I} über den Halteabschnitt 18 auf die Faltzone im Schaft 12 übertragen wird. Da sich bevorzugt der Halteabschnitt 18 axial nicht verformt, führt der Versatz der Buchse 50 in Installationsrichtung R_{I} zur Ausbildung des Stauchwulstes 14.

Beginnend am Halteflansch 54 erstreckt sich die Buchse 50 in hohlzylindrischer Form 56 mit einem Innengewinde 58 in Installationsrichtung R_{I}. Im Bereich des Halteabschnitts 18 weist die radiale Außenseite bevorzugt eine Vertiefung 60 auf, in die eine radial innere Abstufung 26 des Halteabschnitts 18 eingreift. In axialer Richtung wird die Vertiefung 60 einerseits durch den Halteflansch 54 und andererseits durch eine Endstufe 64 des konischen Endabschnitts 62 begrenzt. Somit dienen auch diese beiden Stufen 54, 64 einer bevorzugten Fixierung der Axialposition der Buchse 50 im Außenkörper 10.

Der konische Endabschnitt 62 reduziert seine Wandstärke in Installationsrichtung R_{I}, um in einer axialen Stützfläche 66 auszulaufen. Die Stützfläche 66 ist vorzugsweise konfiguriert, um sich an der Verteilerscheibe 30 (siehe oben) lastabtragend abzustützen.

Während der Herstellung einer Schraubverbindung mit dem Blindniet 1 wird ein Gewindebolzen in das Innengewinde 58 der Buchse 50 eingeschraubt. Alternativ dazu ist ebenfalls bevorzugt, dass der Gewindebolzen in ein weibliches Gewindeelement (nicht gezeigt) axial angrenzend an den Blindniet 1 eingeschraubt wird. Während des Verschraubens wird die Buchse 50 in Installationsrichtung Ri versetzt. Dabei werden die Verformungs- und Stauchkräfte im Halteabschnitt 18 von der Buchse 50 auf den Außenkörper 10 übertragen und von dort in die Stauchzone des Schafts 12 weitergeleitet.

Bei thermischen und chemischen Belastungen des Außenkörpers 10 oder bei stark verformbaren Materialien des Außenkörpers 10 ist ein sicherer Halt des Außenkörpers 10 auf der axial versetzten Buchse 50 von Bedeutung. Um dies zu gewährleisten, ist zumindest ein axialer Teilbereich des Halteabschnitts 18 durch eine Fixierhülse 70 umfänglich eingefasst. Vorzugsweise ist ein Innendurchmesser der Fixierhülse 70 derart gewählt, dass eine radiale Ausdehnung des Außenkörpers 10 im Halteabschnitt 18 die radiale Ausdehnung des Halteflansches 54 nicht übersteigt. Natürlich kann in einem gewissen Toleranzbereich die radiale Ausdehnung des Halteabschnitts 18 den Außendurchmesser des Halteflansches 54 übersteigen. Dies ist aber nur so lange tolerierbar, wie die radiale Dimensionierung der Fixierhülse 70 und des Halteflansches 54 ein axiales Lösen des Außenkörpers 10 von der Buchse 50 entgegen der Installationsrichtung R_{I} verhindert. Daher ist es bevorzugt, dass die Fixierhülse 70 die radiale Ausdehnung des Außenkörpers 10 auf maximal die radiale Ausdehnung des Halteflansches 54 der Buchse 50 beschränkt.

Um eine Handhabung der Fixierhülse 70 zu unterstützen, weist diese bevorzugt einen umlaufenden Einstich 74 auf. Zudem stellt der Einstich 74, der ähnlich einem Radialsteg radial einwärts in den Außenkörper 10 ragt, Stützflächen für den Außenkörper 10 bereit. Denn gerade bei einer axialen Kompression des Außenkörpers 10 in einer Verbindung des Blindniets 1 kann sich der Außenkörper 10 sowohl an der Fixierhülse 70 wie auch an der Buchse 50 abstützen. Zudem sorgt diese Formgebung der Fixierhülse 70 bevorzugt auch für einen Formschluss zwischen Fixierhülse 70, Außenkörper 10 und Buchse 50. Dieser Formschluss verhindert das Lösen der Fixierhülse 70 vom Außenkörper 10.

Gemäß unterschiedlicher bevorzugter Konstruktionsalternativen des Blindniets 1 besteht die Fixierhülse 70 aus Kunststoff oder Metall oder einem Verbundmaterial, wie faserverstärkter Kunststoff. In Abhängigkeit vom Herstellungsverfahren des Blindniets 1 wird die Fixierhülse 70 separat hergestellt und dann auf dem Außenkörper 10 angeordnet. Es ist ebenfalls bevorzugt, die Fixierhülse 70 an den Außenkörper 10 anzuspritzen. Dies wird vorzugsweise in getrennten Spritzgussverfahren oder mittels anderer kunststoffverarbeitender Verfahren oder in einem 2K-Spritzgussverfahren realisiert.

Die Variabilität in der Herstellung des Blindniets 1 eröffnet ebenfalls bevorzugt eine Materialvariabilität für den Außenkörper 10. Da der Außenkörper 10 ein Dämpfungsverhalten in einer Verbindung des Blindniets 1 realisiert und zudem äußeren mechanischen und/oder chemischen und/oder thermischen und/oder anderen Einflüssen widerstehen muss, ist die nahezu freie Materialwahl für die Realisierung des Außenkörpers 10 von Bedeutung. Diese ergibt sich aus der oben beschriebenen Konstruktion des Blindniets 1 und gerade der Fixierhülse 70, die den Halt des Außenkörpers 10 in der Blindniet-Konstruktion gewährleistet.

Für den Außenkörper 10 besonders bevorzugte Materialien sind thermoplastische Elastomere und Silikone, vorzugsweise vernetztes Polypropylen-Ethylen-Propylen-Dien-Elastomer (EPDM-X+PP) mit einer Temperaturbeständigkeit für T<80 °C, Ethylen-Propylen-Dien-Elastomer (EPDM) mit einer Temperaturbeständigkeit für T<120 °C und Polyvinylmethylsiloxan (VMQ) mit einer Temperaturbeständigkeit für T<150 °C.

Um eine Verbindung zwischen dem Trägerbauteil T und einem Befestigungsteil B herzustellen, wird zunächst der Blindniet 1 in eine Bohrung 91 des Trägerbauteils T eingesetzt (Schritt S1). Eventuelle Toleranzen im Durchmesser der Bohrung 91 und im Außendurchmesser des Schafts 12 werden durch bevorzugte Stege 13 an der radialen Außenseite des Schafts 12 ausgeglichen. Die Stege 13 erstrecken sich vorzugsweise in axialer Richtung von dem Befestigungsflansch 16 aus und stehen radial von der radialen Außenseite des Schafts 12 vor. Aufgrund einer elastischen Verformbarkeit gleichen die Stege 13 Toleranzen aus und stützen sich elastisch verformt am Rand der Bohrung 91 ab. Zudem stützt sich der Befestigungsflansch 16 an der dem Befestigungsteil B zugewandten Seite des Trägerbauteils T ab.

Nun wird das Bauteil B mit einer Bohrung 93 auf die zentrale Öffnung im Blindniet 1 ausgerichtet und am Befestigungsflansch 16 angeordnet (Schritt S2). Eine Befestigungsschraube S durchläuft nun beide Bohrungen 91, 93 und wird in das Innengewinde 58 der Buchse 50 oder in ein anderes weibliches Gewindeelement (nicht gezeigt) eingeschraubt (Schritt S3). Während des Einschraubens wird der Blindniet 1 in axialer Richtung komprimiert und das Befestigungsteil B und das Trägerbauteil T werden aufeinanderzu versetzt. Durch die axiale Kompression des Blindniets 1 wird der Schaft 12 gestaucht und die Stauchwulst 14 ausgebildet. Die Stauchwulst 14 legt sich am Trägerbauteil T an. An der gegenüberliegenden Seite des Trägerbauteils T stützt sich der Befestigungsflansch 16 ab, an dem wiederum das Befestigungsteil B angreift.

Während des Stauchvorgangs wird die Buchse 50 in Richtung Befestigungsteil B bewegt, bis sie bevorzugt an der Verteilerscheibe 30 lastabtragend angreift. Dabei hält die Fixierhülse 70 den Außenkörper 10 am Halteabschnitt 18 fest auf dem hohlzylindrischen Abschnitt 56 der Buchse 50, sodass der Außenkörper 10 nicht über den Halteflansch 54 gleiten kann.

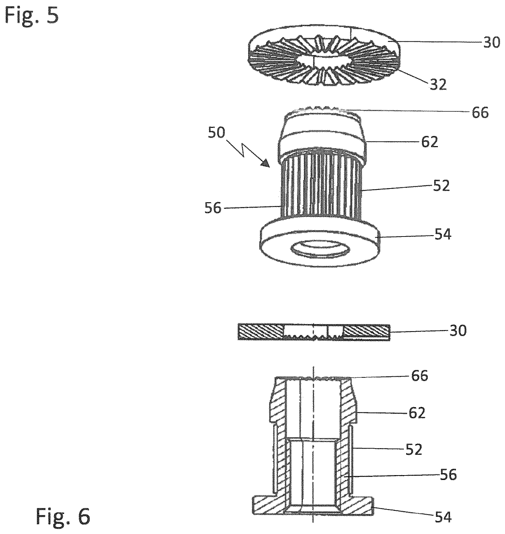

Um die Anlage der Buchse 50 an der Verteilerscheibe 30 zu stabilisieren, sind vorzugsweise Buchse 50 und/oder Verteilerscheibe 30 im Kontaktbereich profiliert. Dies ist in den Figuren 5 und 6 in einer bevorzugten Ausführungsform veranschaulicht. Gemäß einer Ausgestaltungsalternative weist die Verteilerscheibe 30 eine flächige Rändelung 32 auf. Diese verläuft bevorzugt in radialer Richtung, um bei einem Angriff der Stützfläche 66 der Buchse 50 eine Rotationshemmung zu realisieren. Es ist zudem bevorzugt, dass die Stützfläche 66 gezahnt oder profiliert ist, um eine Positionsstabilität zwischen Verteilerscheibe 30 und Buchse 50 zu gewährleisten.

Der Blindniet 1 wird bevorzugt gemäß unterschiedlicher Herstellungsrouten hergestellt. Ausgangspunkt ist zunächst die Produktion oder allgemein das Bereitstellen der metallischen Buchse 50, vorzugsweise mittels Kaltschlagen oder ähnlichen bekannten Verfahren (H1). Ebenfalls mit bekannten Verfahren wird die Verteilerscheibe 30 aus Metall hergestellt.

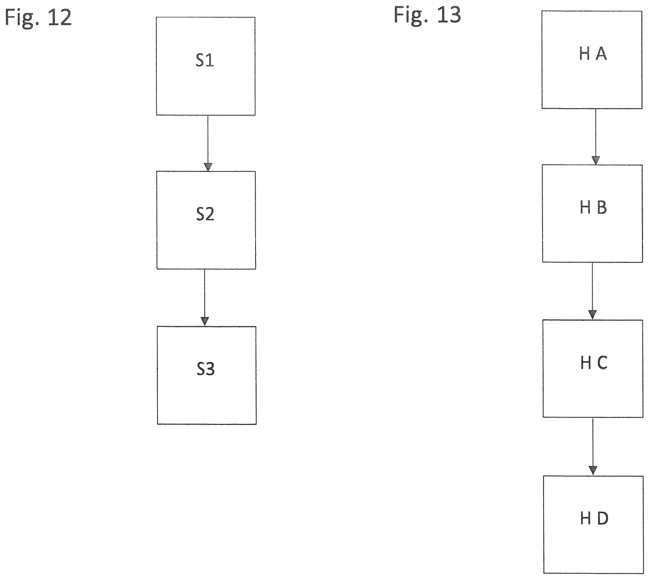

Gemäß einer ersten Herstellungsroute (Figur 13) wird die Buchse 50 gemeinsam mit der Fixierhülse 70 in einer Spritzgussform koaxial zueinander angeordnet (Schritt H A). Die Anordnung ist bevorzugt so gewählt, dass zur Herstellung des Außenkörpers 10 ein Kunststoff mit den gewünschten Materialeigenschaften (siehe oben) zwischen Buchse 50 und Fixierhülse 70 eingespritzt wird (Schritt H B). Die Spritzgussform gibt dazu die komplementäre Form des Außenkörpers 10 nach der obigen Beschreibung vor, so dass der Außenkörper 10 durch den eingespritzten Kunststoff ausgebildet wird. Nach dem bevorzugten Entformen des Außenkörpers 10 aus der Spritzgussform (Schritt H C) liegt somit der Verbund aus Außenkörper10, Fixierhülse 70 und Buchse 50 vor. Es versteht sich, dass der entformte Außenkörper 10 eine freie zentrale Durchgangsöffnung aufweist.

Abschließend wird bevorzugt die Verteilerscheibe 30 im Befestigungsflansch 16 verliersicher angeordnet (Schritt H D).

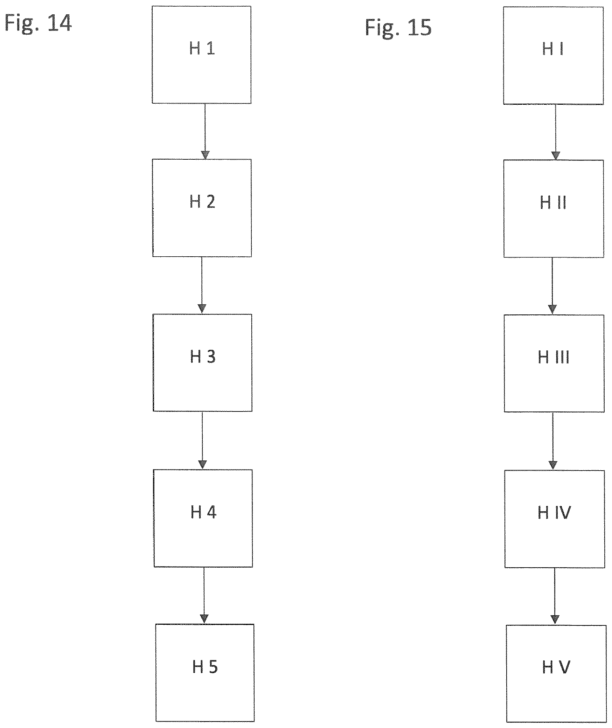

Eine alternative Herstellungsroute veranschaulicht Figur 14 in den Schritten 1-4. Diese Herstellungsroute geht von den bereits bereitgestellten Einzelteilen Buchse 50, Außenkörper 10, Fixierhülse 70 und Verteilerscheibe 30 des Blindniets 1 aus, die dann zusammengesetzt werden. Zunächst wird bevorzugt die Fixierhülse 70 auf dem Halteabschnitt 18 angeordnet. Die Anordnung kann durch einen Formschluss zwischen Außenkörper 10 und Fixierhülse 70 unterstützt werden, was aber nur optional ist (Schritt 2). Die Fixierhülse 70 besteht bevorzugt aus Metall, Kunststoff oder einem Verbundmaterial. Danach wird die Buchse 50 mit dem konischen Endabschnitt 62 voraus in das axiale Ende des Außenkörpers 10 eingesetzt (Schritt H3), welches dem Befestigungsflansch 16 abgewandt ist. Aufgrund der bevorzugten Elastizität des Materials des Außenkörpers 10 wird der konische Endabschnitt 62 in den Außenkörper 10 gezwängt, bis der Halteabschnitt 18 am hohlzylindrischen Abschnitt 56 anliegt. In dieser Position stützt sich vorzugsweise der Halteflansch 54 am axialen Ende des Außenkörpers 10 ab. Zudem unterstützt die Fixierhülse 70 vorzugsweise eine reibschlüssige Verbindung zwischen Buchse 50 und Außenkörper 10. Alternativ ist es bevorzugt, zunächst die Buchse 50 in den Außenkörper 10 einzusetzen (Schritt H3) und erst danach die Fixierhülse 70 auf dem Außenkörper 10 anzuordnen (Schritt H 4). Abschließend wird die Verteilerscheibe 30 im Befestigungsflansch 16 angeordnet (Schritt H5).

Gemäß einer weiteren bevorzugten Herstellungsalternative (Figur 15) wird die Fixierhülse 70 in der Spritzgussform angeordnet (Schritt H I). Die Anordnung ist bevorzugt so gewählt, dass zur Herstellung des Außenkörpers 10 ein Kunststoff mit den gewünschten Materialeigenschaften (siehe oben) in die Fixierhülse 70 eingespritzt wird (Schritt H II). Die Spritzgussform gibt dazu die komplementäre Form des Außenkörpers 10 nach der obigen Beschreibung vor, so dass der Außenkörper 10 durch den eingespritzten Kunststoff ausgebildet wird. Nach dem bevorzugten Entformen des Außenkörpers 10 aus der Spritzgussform (Schritt H III) liegt somit der Verbund aus Außenkörper10 und umgebender Fixierhülse 70 vor. Es versteht sich, dass der entformte Außenkörper 10 eine freie zentrale Durchgangsöffnung aufweist. Nachfolgend wird bevorzugt die metallische Buchse 50 in den Verbund aus Außenkörper 10 und Fixierhülse 70 eingesteckt (Schritt H IV), so dass sich die bereits oben beschriebene bevorzugte Konstruktion des Blindniets 1 ergibt.

Abschließend wird vorzugsweise die Verteilerscheibe 30 im Befestigungsflansch 16 verliersicher angeordnet (Schritt H V).

### 6. Bezugszeichenliste

- 1: Blindniet
- 10: Außenkörper
- 12: Schaft
- 13: Stege
- 14: Stauchwulst
- 16: Befestigungsflansch
- 18: Halteabschnitt
- 19: Stufe
- 20: Einstich
- 22: Endflansch
- 24: Stützfläche
- 30: Verteilerscheibe
- 32: Rändelung
- 50: Buchse
- 52: Längsrändelung
- 54: Halteflansch
- 56: hohlzylindrischer Abschnitt
- 58: Innengewinde
- 60: Vertiefung
- 62: konischer Endabschnitt
- 64: Endstufe
- 66: axiale Stützfläche
- 70: Fixierhülse
- 74: Einstich
- 91: Bohrung im Trägerbauteil T
- 93: Bohrung im Befestigungsteil B
- T: Trägerbauteil
- B: Befestigungsteil
- Ri: Installationsrichtung

## Patentansprüche

1. Blindniet (1) für eine Schraubverbindung, der die folgenden Merkmale aufweist:
a. einen elastischen Außenkörper (10) mit einem hülsenförmigen Schaft (12), der einen Befestigungsflansch (16) und eine zu einer Stauchwulst (14) faltbare hohlzylindrische Faltzone aufweist, so dass ein Trägerbauteil zwischen dem Befestigungsflansch (16) und der Stauchwulst (14) abstützbar ist,
b. eine metallische Buchse (50), die innerhalb des Außenkörpers (10) angeordnet ist und die einen im Bereich der Faltzone angeordneten Abstützabschnitt (62) aufweist, der relativ zum Außenkörper (10) längsverschiebbar ist, sowie an einem vom Abstützabschnitt (62) abgewandten axialen Ende von einem ringförmigen Halteflansch (54) axial begrenzt wird, der eine radiale Ausdehnung des Außenkörpers (10) abdeckt, und
c. eine den Außenkörper (10) umgebende Fixierhülse (70), die benachbart zum Halteflansch (54) der Buchse (50) angeordnet ist, sich axial in Richtung des Befestigungsflansches (16) erstreckt und eine radiale Ausdehnung des Außenkörpers (10) außerhalb der Faltzone sowie zwischen Buchse (50) und Fixierhülse (70) auf maximal die radiale Ausdehnung des Halteflansches (54) der Buchse (50) begrenzt.

2. Blindniet (1) gemäß Patentanspruch 1, in dem der Halteflansch (54) vollständig die radiale Ausdehnung des Außenkörpers (10) abdeckt und/oder in dem eine axiale Länge der Fixierhülse (70) eine axiale Länge der Faltzone begrenzt, ohne durch eine Verjüngung einer Wandstärke des Außenkörpers (10) die Faltzone zu unterstützen.

3. Blindniet (1) gemäß einem der vorhergehenden Patentansprüche, in dem der Außenkörper (10) einen Befestigungsflansch (16) aufweist, der einen Aufnahmeraum für eine Verteilerscheibe (30) bereitstellt.

4. Blindniet (1) nach Patentanspruch 3, in dessen Befestigungsflansch (16) die Verteilerscheibe (30) verliersicher gehalten ist, die vorzugsweise eine Rändelung (32) an einer Seite zugewandt zur Buchse (50) aufweist.

5. Blindniet (1) gemäß einem der vorhergehenden Patentansprüche, in dem die Buchse (50) dem Befestigungsflansch (16) zugewandt einen konischen Endabschnitt (62) aufweist, der eine axiale Stützfläche (66) und einen axialen Hinterschnitt bereitstellt.

6. Blindniet (1) gemäß Patentanspruch 5, der an der axialen Stützfläche (66) eine Rändelung als Verdrehsicherung aufweist.

7. Blindniet (1) gemäß einem der vorhergehenden Patentansprüche, in dem die Fixierhülse (70) einen umfänglichen Einstich (72) aufweist, der einen Formschluss zwischen Außenkörper (10) und Buchse (50) unterstützt.

8. Blindniet (1) nach Patentanspruch 1, in dem die Buchse (50) an einer radialen Außenseite eine Verdrehsicherung in Form von Längsrändeln (52) aufweist, die außerhalb der Faltzone angeordnet sind.

9. Blindniet (1) gemäß einem der vorhergehenden Patentansprüche, in dem unterhalb des Befestigungsflansches (16) des Außenkörpers (10) über den Umfang verteilte Stege (13) zum Festklemmen des Außenkörpers (10) in einer Bohrung (91) eines Trägerteils (T) vorgesehen sind und/oder in dem die Buchse (50) als Gewindebuchse mit einem Innengewinde (58) zur Aufnahme einer Befestigungsschraube (S) ausgebildet ist, so dass der Blindniet (1) als Blindnietmutter dient.

10. Blindniet (1) nach einem der Ansprüche 1 bis 8, in dem die Buchse (50) gewindefrei ausgebildet ist.

11. Blindniet (1) nach einem der vorhergehenden Ansprüche, in dem der Außenkörper (10) aus einem thermoplastischen Elastomer auf Polyesterbasis oder einem vernetzten Elastomer mit guter Chemikalienbeständigkeit und/oder Wärmeformbeständigkeit oder aus einem Silikon besteht.

12. Verbindungsverfahren für eine Schraubverbindung zwischen einem Trägerbauteil (T) und einem Befestigungsteil (B), das die folgenden Schritte aufweist:
a. Einstecken (S1) des Blindniets (1) gemäß einem der vorhergehenden Patentansprüche in eine Bohrung (91) im Trägerbauteil (T),
b. Anordnen (S2) des Befestigungsteils (B) mit einer Öffnung (93) angrenzend an den Befestigungsflansch (16) des Außenkörpers (10) und
c. Einschrauben (S3) einer Befestigungsschraube (S) in den Blindniet (1), wobei der Außenkörper (10) in einer Faltzone derart gefaltet wird, dass sich der Befestigungsflansch (16) und eine Faltwulst an gegenüberliegenden Seiten des Trägerbauteils (T) abstützen, wenn das Trägerbauteil (T) und das Befestigungsteil (B) aneinander befestigt sind.

13. Verbindung zwischen einem Trägerbauteil (T) und einem Befestigungsteil (B), die mithilfe einer Schraubverbindung unter Verwendung eines Blindniets (1) gemäß einem der Patentansprüche 1-11 aneinander befestigt sind.

14. Herstellungsverfahren für einen Blindniet (1), das die folgenden Schritte aufweist:
a. Bereitstellen (H1) einer metallischen Buchse (50) mit einem ringförmigen Halteflansch (54),
b. Einstecken (H3) der Buchse (50) in einen elastischen Außenkörper (10) mit einem hülsenförmigen Schaft (12), der einen Befestigungsflansch (16) und eine zu einer Stauchwulst (14) faltbare hohlzylindrische Faltzone aufweist, und
c. Vorsehen einer den Außenkörper (10) umgebenden Fixierhülse (70) benachbart zum Halteflansch (54) der Buchse (50), die sich axial in Richtung des Befestigungsflansches erstreckt (H2; H4).

15. Herstellungsverfahren für einen Blindniet (1), das die folgenden Schritte aufweist:
a. Anordnen einer Fixierhülse (70) in einer Spritzgussform (H I), die eine Form eines elastischen Außenkörpers mit einem hülsenförmigen Schaft (12) vorgibt, wobei der hülsenförmige Schaft (12) einen Befestigungsflansch (16) und eine zu einer Stauchwulst (14) faltbare hohlzylindrische Faltzone aufweist,
b. Einspritzen (H II) des elastischen Außenkörpers (10) mit dem hülsenförmigen Schaft (12) in die Fixierhülse (70) und
c. Einstecken (H IV) einer metallischen Buchse (50) mit einem ringförmigen Halteflansch (54) in den Außenkörper (10) mit Fixierhülse (70) derart, dass die Fixierhülse (70) den Außenkörper (10) benachbart zum Halteflansch (54) der Buchse (50) umgibt.

16. Herstellungsverfahren für einen Blindniet (1), das die folgenden Schritte aufweist:
a. koaxiales Anordnen einer Fixierhülse (70) und einer metallischen Buchse (50) mit einem ringförmigen Halteflansch (54) in einer Spritzgussform (H A), die eine Form eines elastischen Außenkörpers (10) mit einem hülsenförmigen Schaft (12) vorgibt, wobei der hülsenförmige Schaft (12) einen Befestigungsflansch (16) und eine zu einer Stauchwulst (14) faltbare hohlzylindrische Faltzone aufweist,
b. Einspritzen des elastischen Außenkörpers (10) mit dem hülsenförmigen Schaft (12) zwischen die Fixierhülse (70) und die metallische Buchse (50) (H B), so dass die Fixierhülse (70) den Außenkörper (10) benachbart zum Halteflansch (54) der Buchse (50) umgibt.

## Claims

1. Blind rivet (1) for a screw connection, comprising the following features:
a. an elastic outer body (10) with a sleeve-shaped shaft (12) which comprises a fastening flange (16) and a hollow cylindrical folding zone which is foldable to an upsetting bulge (14), so that a support component is supportable between the fastening flange (16) and the upsetting bulge (14),
b. a metal bushing (50) which is arranged within the outer body (10) and which comprises a support section (62) arranged in the portion of the folding zone, which is longitudinally displaceable relative to the outer body (10) and is axially limited at an axial end facing away from the support section (62) by a ring-shaped retaining flange (54) which covers a radial expansion of the outer body (10), and
c. a fixing sleeve (70) surrounding the outer body (10), which is arranged adjacent to the retaining flange (54) of the bushing (50), extends axially in the direction of the fastening flange (16) and limits a radial expansion of the outer body (10) outside the folding zone as well as between bushing (50) and fixing sleeve (70) to at most the radial expansion of the retaining flange (54) of the bushing (50).

2. Blind rivet (1) according to claim 1, in which the retaining flange (54) completely covers the radial expansion of the outer body (10) and/or in which an axial length of the fixing sleeve (70) limits an axial length of the folding zone without supporting the folding zone by a tapering of a wall thickness of the outer body (10).

3. Blind rivet (1) according to one of the preceding claims, in which the outer body (10) comprises a fastening flange (16) which provides a receiving space for a distributor disc (30).

4. Blind rivet (1) according to claim 3, in the fastening flange (16) of which the distributor disc (30) is held in a loss-proof manner, which preferably has a knurling (32) at a side facing the bushing (50).

5. Blind rivet (1) according to one of the preceding claims, in which the bushing (50) comprises a conical end section (62) facing the fastening flange (16), wherein the conical end section (62) provides an axial support surface (66) and an axial undercut.

6. Blind rivet (1) according to claim 5, which has a knurling at the axial support surface (66) as an anti-rotation protection.

7. Blind rivet (1) according to one of the preceding claims, in which the fixing sleeve (70) comprises a circumferential indentation (72) which supports a positive fit between the outer body (10) and the bushing (50).

8. Blind rivet (1) according to claim 1, in which the bushing (50) comprises at a radial outer side an anti-rotation protection in the form of longitudinal knurls (52) which are arranged outside the folding zone.

9. Blind rivet (1) according to one of the preceding claims, in which, below the fastening flange (16) of the outer body (10), circumferentially distributed webs (13) are provided for firmly clamping the outer body (10) in a bore (91) of a support component (T) and/or in which the bushing (50) is formed as a threaded bushing with an inner thread (58) for receiving a fastening screw (S), so that the blind rivet (1) serves as a blind rivet nut.

10. Blind rivet (1) according to one of claims 1 to 8, in which the bushing (50) is formed threadless.

11. Blind rivet (1) according to one of the preceding claims, in which the outer body (10) is made of a polyester-based thermoplastic elastomer or a cross-linked elastomer with good chemical resistance and/or thermal stability or of a silicone.

12. Connection method for a screw connection between a support component (T) and a fastening part (B), comprising the following steps:
a. inserting (S1) the blind rivet (1) according to one of the preceding claims into a bore (91) in the support component (T),
b. arranging (S2) the fastening part (B) with an opening (93) adjacent to the fastening flange (16) of the outer body (10) and
c. screwing (S3) a fastening screw (S) into the blind rivet (1), wherein the outer body (10) is folded in a folding zone in such a manner that the fastening flange (16) and a folding bulge are supported on opposite sides of the support component (T) when the support component (T) and the fastening part (B) are fastened to each other.

13. Connection between a support component (T) and a fastening part (B) which are fastened to each other by means of a screw connection using a blind rivet (1) according to one of the claims 1 to 11.

14. Manufacturing method for a blind rivet (1) comprising the following steps:
a. providing (H1) a metal bushing (50) with a ring-shaped retaining flange (54),
b. inserting (H3) the bushing (50) into an elastic outer body (10) with a sleeve-shaped shaft (12) comprising a fastening flange (16) and a hollow-cylindrical folding zone foldable to an upsetting bulge (14), and
c. providing a fixing sleeve (70) surrounding the outer body (10) adjacent to the retaining flange (54) of the bushing (50) and extending axially in the direction of the fastening flange (H2; H4).

15. Manufacturing method for a blind rivet (1) comprising the following steps:
a. arranging a fixing sleeve (70) in an injection mold (H I) which predefines a shape of an elastic outer body with a sleeve-shaped shaft (12), wherein the sleeve-shaped shaft (12) comprises a fastening flange (16) and a hollow-cylindrical folding zone which is foldable to an upsetting bulge (14),
b. injecting (H II) the elastic outer body (10) with the sleeve-shaped shaft (12) into the fixing sleeve (70) and
c. inserting (H IV) a metal bushing (50) with a ring-shaped retaining flange (54) into the outer body (10) with fixing sleeve (70) in such a manner that the fixing sleeve (70) surrounds the outer body (10) adjacent to the retaining flange (54) of the bushing (50).

16. Manufacturing method for a blind rivet (1) comprising the following steps:
a. coaxially arranging a fixing sleeve (70) and a metal bushing (50) with a ring-shaped retaining flange (54) in an injection mold (H A) which predefines a shape of an elastic outer body (10) with a sleeve-shaped shaft (12), wherein the sleeve-shaped shaft (12) comprises a fastening flange (16) and a hollow-cylindrical folding zone which is foldable to an upsetting bulge (14);
b. injecting the elastic outer body (10) with the sleeve-shaped shaft (12) between the fixing sleeve (70) and the metal bushing (50) (H B) so that the fixing sleeve (70) surrounds the outer body (10) adjacent to the retaining flange (54) of the bushing (50).

## Revendications

1. Rivet aveugle (1) destiné à un raccord vissé, qui présente les caractéristiques suivantes :
a) un corps extérieur élastique (10) avec une tige en forme de manchon (12), qui comporte une bride de fixation (16) et une zone de pliage cylindrique creuse, pliable jusqu'à un bourrelet de refoulement (14), de sorte qu'un élément porteur peut prendre appui entre la bride de fixation (16) et le bourrelet de refoulement (14),
b) une douille métallique (50), qui est disposée à l'intérieur du corps extérieur (10) et qui comporte un tronçon d'appui (62) disposé au niveau de la zone de pliage, qui est déplaçable longitudinalement par rapport au corps extérieur (10), de même qu'elle est limitée axialement à une extrémité axiale opposée au tronçon d'appui (62) par une bride de maintien annulaire (54), qui recouvre une extension radiale du corps extérieur (10), et
c) un manchon de fixation (70) entourant le corps extérieur (10), qui est disposé près de la bride de maintien (54) de la douille (50), s'étend axialement en direction de la bride de fixation (16) et limite une extension radiale du corps extérieur (10) hors de la zone de pliage ainsi qu'entre la douille (50) et le manchon de fixation (70) au maximum à l'extension radiale de la bride de maintien (54) de la douille (50).

2. Rivet aveugle (1) selon la revendication 1, dans lequel la bride de maintien (54) recouvre complètement l'extension radiale du corps extérieur (10) et / ou dans lequel une longueur axiale du manchon de fixation (70) limite une longueur axiale de la zone de pliage, sans favoriser la zone de pliage par un rétrécissement d'une épaisseur de paroi du corps extérieur (10).

3. Rivet aveugle (1) selon l'une des revendications précédentes, dans lequel le corps extérieur (10) présente une bride de fixation (16), qui fournit un espace de réception à une rondelle de répartition (30).

4. Rivet aveugle (1) selon la revendication 3, dans la bride de fixation (16) duquel la rondelle de répartition (30) est maintenue de manière imperdable, qui présente de préférence un moletage (32) sur une face tournée vers la douille (50).

5. Rivet aveugle (1) selon l'une des revendications précédentes, dans lequel la douille (50) présente un tronçon final conique (62), tourné vers la bride de fixation (16), qui fournit une surface d'appui axiale (66) et une contre-dépouille axiale.

6. Rivet aveugle (1) selon la revendication 5, qui présente un moletage sur la surface d'appui axiale (66) servant de sécurité anti-rotation.

7. Rivet aveugle (1) selon l'une des revendications précédentes, dans lequel le manchon de fixation (70) présente une gorge (72) circonférentielle, qui favorise un procédé d'accouplement mécanique entre le corps extérieur (10) et la douille (50).

8. Rivet aveugle (1) selon la revendication 1, dans lequel la douille (50) présente une sécurité anti-rotation sous la forme d'un moletage longitudinal (52) sur une face extérieure radiale, qui est disposé en dehors de la zone de pliage.

9. Rivet aveugle (1) selon l'une des revendications précédentes, dans lequel des nervures (13) réparties sur le pourtour sont prévues en dessous de la bride de fixation (16) du corps extérieur (10) pour immobiliser le corps extérieur (10) dans un alésage (91) d'un élément porteur (T) et / ou dans lequel la douille (50) est conçue sous la forme d'une douille filetée avec un taraudage (58) destiné à recevoir une vis de fixation (S), de sorte que le rivet aveugle (1) sert d'écrou borgne à riveter.

10. Rivet aveugle (1) selon l'une des revendications 1 à 8, dans lequel la douille (50) est conçue sans filetage.

11. Rivet aveugle (1) selon l'une des revendications précédentes, dans lequel le corps extérieur (10) est constitué d'un élastomère thermoplastique à base de polyester ou d'un élastomère réticulé avec une bonne résistance aux agents chimiques et / ou stabilité dimensionnelle à la chaleur ou d'une silicone.

12. Procédé d'assemblage d'un raccord à vis entre un élément porteur (T) et un élément de fixation (B), qui présente les étapes suivantes :
a) l'insertion (S1) du rivet aveugle (1) selon l'une des revendications précédentes à l'intérieur d'un alésage (91) percé dans l'élément porteur (T),
b) la disposition (S2) de l'élément de fixation (B) avec une ouverture (93) adjacente à la bride de fixation (16) du corps extérieur (10) et
c) le serrage (S3) d'une vis de fixation (S) dans le rivet aveugle (1), sachant que le corps extérieur (10) est plié dans une zone de pliage de telle manière que la bride de fixation (16) et un bourrelet de pliage s'appuient sur des faces opposées de l'élément porteur (T), lorsque l'élément porteur (T) et l'élément de fixation (B) sont fixés l'un à l'autre.

13. Assemblage entre un élément porteur (T) et un élément de fixation (B), qui sont fixés l'un à l'autre à l'aide d'un raccord vissé moyennant l'utilisation d'un rivet aveugle (1) selon l'une des revendications 1-11.

14. Procédé de fabrication d'un rivet aveugle (1), qui présente les étapes suivantes :
a) la fourniture (H1) d'une douille métallique (50) avec une bride de maintien annulaire (54),
b) l'insertion (H3) de la douille (50) dans un corps extérieur élastique (10) avec une tige en forme de manchon (12), qui comporte une bride de fixation (16) et une zone de pliage cylindrique creuse, pliable jusqu'à un bourrelet de refoulement (14), et
c) la mise à disposition d'un manchon de fixation (70) entourant le corps extérieur (10) près de la bride de maintien (54) de la douille (50), qui s'étend axialement en direction de la bride de fixation (H2 ; H4).

15. Procédé de fabrication d'un rivet aveugle (1), qui présente les étapes suivantes :
a) la disposition d'un manchon de fixation (70) dans un moule à injection (H I), qui prédéfinit une forme d'un corps extérieur élastique avec une tige en forme de manchon (12), sachant que la tige en forme de manchon (12) comporte une bride de fixation (16) et une zone de pliage cylindrique creuse, pliable jusqu'à un bourrelet de refoulement (14),
b) l'injection (H II) du corps extérieur élastique (10) avec la tige en forme de manchon (12) dans le manchon de fixation (70) et
c) l'insertion (H IV) d'une douille métallique (50) avec une bride de maintien annulaire (54) dans le corps extérieur (10) avec le manchon de fixation (70), de sorte que le manchon de fixation (70) entoure le corps extérieur (10) près de la bride de maintien (54) de la douille (50).

16. Procédé de fabrication d'un rivet aveugle (1), qui présente les étapes suivantes :
a) la disposition coaxiale d'un manchon de fixation (70) et d'une douille métallique (50) avec une bride de maintien annulaire (54) dans un moule à injection (H A), qui prédéfinit une forme d'un corps extérieur élastique (10) avec une tige en forme de manchon (12), sachant que la tige en forme de manchon (12) comporte une bride de fixation (16) et une zone de pliage cylindrique creuse, pliable jusqu'à un bourrelet de refoulement (14),
b) l'injection du corps extérieur élastique (10) avec la tige en forme de manchon (12) entre le manchon de fixation (70) et la douille métallique (50) (H B), de sorte que le manchon de fixation (70) entoure le corps extérieur (10) près de la bride de maintien (54) de la douille (50).
